Europäisches Patentamt

European Patent Office

Office européen des brevets

(11) Publication number: **0 484 608 A1**

# EUROPEAN PATENT APPLICATION

(21) Application number: **90810858.2**

(22) Date of filing: **08.11.90**

(51) Int. Cl.5: **G02F 1/37**, H01S 3/109

(43) Date of publication of application:
**13.05.92 Bulletin 92/20**

(84) Designated Contracting States:
**CH DE FR GB IT LI SE**

(71) Applicant: **SOVIET-SWEDISH JOINT VENTURE "HOROS"**
**ul. Ostrovyanova d. 15/1, 232**
**Moscow, 117437(SU)**

(72) Inventor: **Davydov, Vassili Andreevitch**
**ul. Ostrovityanova 15/1, 232**
**SU-117437 Moscow(SU)**

(74) Representative: **Reverdin, André Pierre**
**c/o Katzarov S.A. 19, Rue des Epinettes**
**CH-1227 Genève(CH)**

(54) Device for generating harmonics of optical radiation.

(57) What is claimed is a device for generating harmonics of optical radiation, comprising a source (1) of optical radiation, in so doing, parameters of optical radiation (3) vary along the beam cross-section. At least one nonlinear optical element (2) is arranged in the path of the radiation (3) beam and the geometric parameters and shape of said element (2) are chosen in keeping with the change in parameters of the optical radiation (3) beam in cross-section. This compliance is attained from the condition of the maximum efficiency of harmonics (4) generation with the preset parameters of optical radiation (3).

FIG.2a

FIG.2b

Field of the Art

The present invention relates to quantum electronics and, more specifically, to devices for generating harmonics of optical radiation.

State of the Art

There is known in the art a device for generating a second harmonic (USA,A,No.4408329) wherein in order to enhance efficiency of the second harmonic generation a nonlinear optical element, in the given case a crystal, is arranged in a laser resonator. The laser is made so as to enhance the second harmonic generation. To this end, laser radiation is formed with linear polarization and radiation intensity is increased by means of modulation of the laser resonator quality. This helps to enhance somewhat the second harmonic generation of laser radiation.

However, in such devices variation in the parameters of optical radiation along the beam cross-section is not taken into account, although this kind of changes are of appreciable value in almost all laser units. Elimination of these changes involves sizable difficulties and often it is inexpedient.

The known device ensures certain growth in efficiency of the second harmonic generation only in a narrow range of optical radiation parameters, and in the general case one fails to achieve effective harmonic generation.

Also known is a device for the generation of optical radiation harmonics (article in IEEE J. of Quantum Electronics, 1987, vol GE-23, pp. 1361-1371), where two crystals of different length along the axis of radiation propagation and different orientation relative to the plane of optical radiation polarization are installed in the path of an optical radiation beam, in particular, for the second harmonic generation. In this device in the first crystal there is generated a second harmonic in the part of the input optical radiation beam wherein intensity is close to maximum and in the same crystal the plane of second harmonic polarization turns. In the second crystal the second harmonic is generated in that part of the input optical radiation beam where the intensity is markedly lower than maximum. Since the plane of polarization of the radiation of the second harmonic generated in the second crystal is turned to 90° relative to the plane of polarization of radiation of the second harmonic generated in the first crystal, the output radiation after two crystals has an appreciable polarization nonuniformity.

In this device it is possible to somewhat enhance efficiency of the generation of optical radiation harmonics. However, low quality of harmonic radiation, namely, presence of considerable polarization nonuniformity, high requirements set to the accuracy of alignment and stability in the parameters of the structure inhibits application of the device in practice.

In the claims and specification use is made of the term "linear optical element", by which there is meant an optical element with negligible efficiency of nonlinear parametric processes both for the input radiation, namely, the radiation of an optical radiation source, and for optical radiation harmonics.

Summary of the Invention

The invention is based on the problem of providing a device for generating harmonics of optical radiation with such a structure of nonlinear optical element which would permit enhancing efficiency of the generation of optical radiation harmonics for beams with parameters variable in cross section, simplifying the device structure, expanding the dynamic range of intensities of the radiation harmonica and obtaining high-quality harmonic radiation.

The problem set forth is solved by that in the device for generating optical radiation harmonics, comprising a source of optical radiation, whose parameters vary in the beam cross-section and, at least, one nonlinear optical element arranged in the path of optical radiation emitted by a radiation source, according to the invention, geometrical parameters and the shape of a nonlinear optical element are chosen in view of the condition under which efficiency of the radiation harmonic generation during passage via the nonlinear optical element of optical radiation in each point of the intersection of a beam by the plane perpendicular to the direction of optical radiation propagation is close to the maximum for radiation with the preset parameters from a radiation source.

It is expedient that geometric parameters and the shape of a nonlinear optical element in the path of radiation propagation along the Z axis be chosen by way of determining the parameters of optical radiation in the XY plane perpendicular to the Z axis of radiation propagation, and the fields in this plane with essentially the same values of these parameters and further calculation for each of these fields of the length of the nonlinear optical element along the Z axis of optical radiation propagation from the condition of maximum efficiency of radiation harmonic generation, in so doing, the efficiency $\eta$ of harmonic generation should be defined from the equation:

$$\eta = \eta_{max} \, sn^2([\eta_o/\eta_{max}]^{\frac{1}{2}}, m), \qquad (1)$$

where

$\eta_{max}$    is the maximum efficiency of harmonic generation for the given harmonic,

$$\left(1+f_1\right)F\big/t_1^{\,2}\left(F+G\right);$$

sn    is an elliptic Jacobi function;

$\eta_o$    the drive, $\eta_o = (1 + f_1)^2/(1 + F/G)^2(F/G)C^2l^2(F + G)$;

m    is the modulus $t_2^2/t_1^2$ ;

$t_1, t_2$    defined from the equation, $1-(2-\sigma)t^2 + (1-\sigma)t^4 = \epsilon t^2, (t_2 < t_1)$;

$\sigma$    is the power balance, $1 - f_1 \, F/G$ ;

$\epsilon$    the relative dephasing, $(\delta^2/\eta_o).(1 + f_1)F/(F + G)$;

F    input intensity of optical radiation at frequency

$1\omega, |f|^2$;

G    input intensity of optical radiation at frequency

$f_1\omega, |g|^2$;

H    output intensity of harmonic radiation at frequency

$(1 + f_1)\omega, |h|^2$;

C    the constant of effective nonlinearity;

$\delta$    the total dephasing, $(1/2)\Delta kl$;

$\Delta k$    mismatch of the wave vectors in the input radiation and harmonic;

l    the length of nonlinear optical element along the Z axis of the radiation propagation;

f,g,h    complex amplitudes of input and output optical radiation.

Provision of the device for generating harmonics of optical radiation, which comprises a nonlinear optical element, with such geometric parameters and shape helps enhance efficiency of the harmonic generation with radiation parameters variable with respect to cross-section.

Also expedient that at least one linear optical element be installed in the path of optical radiation. The length of this element along the Z axis of the radiation propagation in each point of intersection of the beam with the XY plane perpendicular to the direction of radiation propagation is chosen so that the total optical length of the system of a nonlinear optical element and a linear optical element in each point of crossing by the XY plane perpendicular to the direction of radiation propagation remains basically constant.

Arranging the linear optical element enables one to eliminate phase distortions of optical radiation introduced by the nonlinear optical element.

It is desirable that the linear optical element be made from a material with a refractive index basically coinciding with that of the material of the nonlinear optical element for harmonic radiation and one of the surfaces of the linear optical element be made curvalinear and coplanar to the curvalinear surface of the nonlinear optical element, in so doing, it is expedient the latter and the linear optical element should be interconnected by these curvalinear surfaces to form a monolithic structure.

This embodiment of the linear optical element and its arrangement relative to the nonlinear optical element ensures minimal phase distortions and minimal losses for Fresnel reflection during refraction and reflection of optical radiation harmonica of optical radiation.

It is expedient a laser be used as an optical radiation source.

This technical solution makes it possible to use the advantage of a laser as an optical radiation source, namely, high radiation intensity, small spectrum width and small divergence to bring about a marked growth in the efficiency of radiation harmonic generation.

When using a laser as an optical radiation source it is also desirable that a nonlinear optical element should be installed inside the laser resonator.

Thus, it is possible to effect many passes of optical radiation via the nonlinear optical element and enhance, therefore, efficiency of the generation of optical radiation harmonics.

It is expedient that an antireflection coat be applied on the input and output surfaces of the system of a nonlinear optical element and a linear optical element, in so doing, on the input surface this coat is made for optical radiation of the optical radiation source, and in output - for the optical radiation harmonic.

Thus, it is possible to decrease to the maximum extent the reflection from the input and output surface of the system of nonlinear optical element and linear optical element.

When arranging the nonlinear optical element inside the laser resonator it is also desirable that a nonreflection coat be applied also on the input and output surfaces of the system of the nonlinear and linear optical elements and the antireflection cost be provided both for laser radiation and the optical radiation harmonic radiation.

It is also expedient that a nonlinear anisotropic crystal be used as a material from which the nonlinear optical element is made, and linear-polarized radiation be used as an input optical radiation (source radiation).

In this case the efficiency of optical radiation harmonic generation can be appreciably enhanced by way of using two features of these crystals, namely, the presence of significant nonlinear susceptability and directions of synchronism, and when linear-polarized optical radiation propagates along them, effective harmonic generation is effected over a great length.

Brief List of Drawings

The invention will become more apparent from the consideration of exemplary embodiments thereof with reference to the accompanying drawings, wherein:

Fig. 1 illustrates a device for generating harmonics of optical generation, according to the invention;

Fig. 2a,b show a device for generating harmonics of optical radiation accommodating a linear optical element, in case (a) the nonlinear optical element and the linear optical element are separated in space from each other, and in case (b) the nonlinear and linear optical elements are interconnected to form a monolithic structure;

Fig. 3 illustrates a device for harmonic generation, wherein a laser serves as an optical radiation source and the system of the nonlinear optical element and the linear optical element is arranged inside the laser resonator;

Fig. 4 a,b are schematics of the distribution of intensity and direction of a wave vector for one of the types of Gaussian beam ($TEM_{DD}$);

Fig. 5 is the shape of the nonlinear optical element to generate second harmonic of the neodymium laser radiation;

Fig. 6 is the configuration of the device for generating fourth harmonic of the neodymium laser radiation.

Embodiments of the Invention

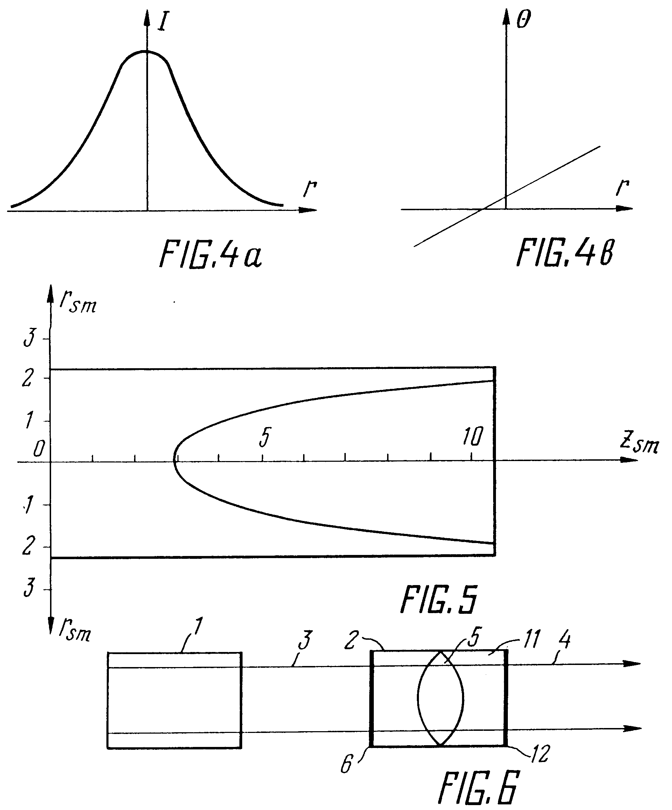

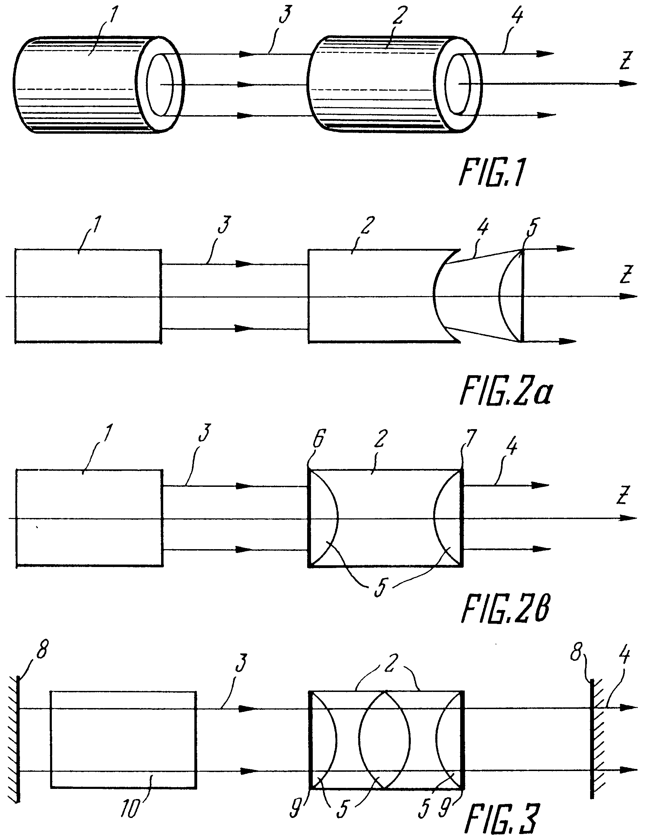

A device for generating optical radiation harmonics (Fig. 1), according to the invention, comprises an optical radiation source 1, a nonlinear optical element 2 is arranged at a distance from said source, and optical radiation 3 whose parameters vary along the beam cross-section (XY plane) propagates from the optical radiation source 1 to the nonlinear optical element 2 along the Z axis. Geometrical parameters and the shape of the nonlinear optical element 2 are chosen from the condition under which the efficiency of generation of harmonics 4 of optical radiation 3 passing through the nonlinear optical element 2 of optical radiation 3 in each point of the intersection of a beam by a plane perpendicular to the direction of propagation of optical radiation 3 is close to the maximum for radiation with the preset parameters from the optical radiation source 1. For this purpose, parameters of the optical radiation 3 are determined in XY plane perpendicular to the Z axis of the propagation of optical radiation 3 and the fields in this plane where radiation parameters are basically the same, namely, intensities F and G of the input radiation 3 in different frequencies and mutual inclination of wave vectors. Consideration of the values of wave vectors in the input radiation 3 and dispersion characteristics of the material of the nonlinear optical element 2 enables one to readily determine the values of $\Delta k$ wave vectors' mismatch.

Using the information about the parameters of input optical radiation, namely, intensities F and G, as well as the information about $\Delta k$ wave vectors mismatch there is determined an optical length l of the nonlinear optical element 2 for each field in the XY plane for which these parameters are basically the same. Summing the data on the length l of the nonlinear optical element 2 along the Z axis depending on the position in the XY plane one obtains complete information about the form and geometric parameters of the nonlinear optical element 2, i.e., the information about the shape of the surfaces of the nonlinear optical element 2 and orientation of these surfaces (curvalinear in the general case) with respect to the direction of

4

propagation of optical radiation 3. Given anisotropic materials are used as a nonlinear optical element 2, the orientation of these surfaces is associated with the singled-out directions of the material of the nonlinear optical element 2.

The length l of the nonlinear optical element 2 in each field with constant parameters of optical radiation 3 is calculated with the aid of a formula for effective generation of harmonics 4 (Y.A.Armstrong, N.Blombergen, N.Ducuing and P.S.Perhan, "Interaction Between Light Waves and a Nonlinear Dielectric", 1962, vol. 127, pp. 1918-1939). Such length l of the nonlinear optical element 2 along the Z axis of the propagation of optical radiation 3 is chosen so that the efficiency $\eta$ of harmonic 4 generation is maximum with the preset parameters of the material of the nonlinear optical element 2 and optical radiation 3.

$$\eta = \eta_{max}\, sn^2([\eta_o/\eta_{max}]^{\frac{1}{2}}, m), \qquad (1)$$

where

$\eta_{max}$     is the maximum harmonic 4 generation efficiency for a preset harmonic,

$$(1+f_1)F/t_1^2(F+G);$$

sn     is the elliptic Jacobi function;

$\eta_o$     is the drive, $\eta_o = (1+f_1)^2/(1+F/G)^2(F/G)C^2l^2(f+G)$;

m     is the modulus $t_2^2$, $t_1^2$ ;

$t_1, t_2$     the drive of equation, $1-(2-\sigma)t^2 + (1-\sigma)t^4 = \epsilon t^2, (t_2 < t_1)$;

$\sigma$     is the power balance, $1-f_1\, F/G$ ;

$\epsilon$     is the relative dephasing, $(\delta^2/\eta_o).(1+f_1)F/(F+G)$;

F     is the input optical radiation 3 intensity at frequency $1\omega$, $|f|^2$;

G     is the input optical radiation 3 intensity at frequency $f_1\omega$, $|g|^2$;

H     is the output harmonic 4 radiation intensity at frequency $(1+f_1)\omega$, $|h|^2$;

C     is the constant of effective nonlinearity;

$\delta$     is the total dephasing, $(1/2)\Delta kl$;

$\Delta k$     is the mismatch of the wave vectors of input optical radiation 3 and harmonic 4;

l     is the length of the nonlinear optical element 2 along the Z axis of the optical radiation 3 propagation.

Equation (1) was obtained from a set of equations:

$$\frac{\partial f}{\partial z} = -cg^*he^{-i\Delta kz}$$
$$\frac{\partial g}{\partial z} = -f_1\, Cf^*he^{-i\Delta kz}$$
$$\frac{\partial h}{\partial z} = (1+f_1)\bullet Cfge^{i\Delta kz}$$

where $1\omega$ and $f_1\omega$ are the frequencies of input optical radiation 3; $(1+f_1)\omega$ is the frequency of output radiation - harmonic 4;

f,g and h are complex amplitudes of input and output optical radiation.

However, the nonlinear optical element 2 with geometric parameters and the form as described hereinabove has, in the general case, one or several curvalinear surfaces. This means that in the general case the nonlinear optical element 2 will introduce marked phase distortions. To rule out these distortions a linear optical element 5 (Fig. 2) is provided at the input and/or output of the nonlinear optical element 2 from the side of the curvalinear surface of the nonlinear optical element 2. The optical length of this (or those) elements 5 along the Z axis of propagation of optical radiation 3 in each point of intersection by plane XY perpendicular to the direction of optical radiation 3 propagation is chosen with a view to making the total optical length of the system of the nonlinear optical element 2 and linear optical element 5 in each point of the intersection of the beam by the plane XY, perpendicular to the direction of propagation of optical radiation 3 basically the same. Figures 2 a and b describe two variants of mutual arrangement of the nonlinear optical element 2 and linear optical element 5. In the first variant the nonlinear optical element 2 has one curvalinear surface, namely, an output one, while the linear optical element 5 is arranged at the output of the nonlinear optical element 2. In the second case the nonlinear optical element 2 has two curvalinear surfaces, and two linear optical elements 5 mounted at the input and output of the nonlinear optical element 2.

5

However, appreciable Fresnel reflection is observed from the curvalinear surfaces of the nonlinear optical element 2 and linear optical element 5 which is hard to eliminate using a conventional antireflection coating for optical surfaces. To eliminate losses caused by Fresnel reflection it is expedient that the linear optical element 5 be made from a material with a refractive index which basically coincides with that of the nonlinear optical element 2 for harmonic 4 radiation, and one of the surfaces of the linear optical element 5 be made curvalinear and coplanar with respect to the curvalinear surface of the nonlinear optical element 2 and the nonlinear optical element 2 and linear optical element 5 be interconnected to form a monolithic structure. An embodiment variant of such a device for generating optical radiation harmonica is given in Fig. 2b. Figure 2b illustrates a variant of the nonlinear optical element 2 with two curvalinear surfaces as to the direction of radiation and arrangement of two linear optical elements 5 at the input and output of the nonlinear optical element 2 with the formation of a monolithic structure.

It is expedient that a laser should be used as a source of optical radiation. Due to a high directivity, small width of the spectrum and negligible divergence of the laser radiation, the harmonic generation efficiency appreciably grows compared to a source other than a laser.

In case a laser is used as a source of optical radiation it is desirable that a nonlinear optical element 2 be arranged inside the laser resonator (Fig. 3). This arrangement of the nonlinear optical element 2 ensures a multiple passage of radiation through the nonlinear optical element 2 and, therefore, makes it possible to enhance radiation harmonic generation efficiency.

At the same time, there is Fresnel reflection at the input and output surfaces of the system of the nonlinear optical element 2 and linear optical element 5. It is expedient that an interferometric costing be applied to eliminate this reflection. In so doing, provided the source 1 of input optical radiation 3 and the nonlinear optical element 2 are spaced from each other and radiation passes once via the nonlinear optical element 2 (Fig. 2b), the antireflection coating 6 on the input surface of the system of the nonlinear optical element 2 and linear optical element 5 should be made for optical radiation 3 of the source 1 of optical radiation, and at the output surface 7 - for the harmonic 4 of optical radiation 3. In case the nonlinear optical element 2 and linear optical element 5 are arranged inside the source 1 of the optical radiation 3 and, in particular, inside a laser resonator 8 (Fig. 3), then radiation passes the input and output surface many times and an antireflection coating 9 on the input and output surfaces of the system of the nonlinear optical element 2 and linear optical element 5 should be made both for laser radiation and for radiation of the harmonic 4 of optical radiation 3. An optical radiation source is formed in the laser by the laser resonator 8 (mirrors) and active element 10.

It is desirable that nonlinear anisotropic crystals should be used as a material to make a nonlinear optical element. This is associated with the fact that in these crystals provision is made for certain directions - directions of synchronism - for which phase mismatch or the mismatch of wave vectors of the input optical radiation and harmonic radiation is actually zero and the values of nonlinear coefficients in these crystals are fairly large. To make use of these crystals advantages, it is necessary to provide linear polarization of input optical radiation which is readily feasible when using many types of lasers.

In the general case in order to attain the maximum efficiency of harmonic generation, it is necessary that a number of nonlinear optical elements 5 should be used. In this case, it is desirable that all these optical elements 2 and 5 be connected to form a monolithic structure (Fig. 3).

Let us consider several specific exemplary embodiments of the device for generating harmonics of optical radiation.

A typical source of optical radiation is a laser with a stable resonator, and in this case radiation parameters are described by the the known Hermit-Gauss equations.

Fig. 4 shows typical relationship of intensity and inclination of the wave vector of optical radiation with respect to the longitudinal axis Z of the optical radiation propagation as a function of radius in the laser with round mirrors in the resonator (mode $TEM_{DD}$). Second harmonic generation is most commonly used as a nonlinear parametric process. A nonlinear crystal serves as thematerial which a nonlinear optical element is made from. In this case generation efficiency can be described by an approximate formula:

$$\eta \;=\; k sn^2(I/(I_1 \cdot \sqrt{k}),\, k), \qquad (2)$$

where

$$k \;=\; ((\Delta k I_1/4) + (1 + (\Delta k I_1/4)^{\frac{1}{2}}))^{-2};$$

$$l_1 = \frac{c \cdot n_1}{\gamma \omega E_0}$$

$l_1$      is nonlinear length of crystal;
c      is light velocity;
$n_1$      is nonlinear refractive index of the nonlinear crystal;
$\gamma$      is effective nonlinearity of the nonlinear crystal;
$\omega$      is the input optical radiation frequency;
$E_0$      is the amplitude of input optical radiation.

The following parameters of radiation are sufficiently distributed for the pulsed neodymium laser with a wavelength of $\lambda$ = 1.06$\mu$m :a characteristic width of the Gaussian beam zero mode a = 1 cm, intensity in the maximum I = 0.6 GW/cm$^2$. In the crystal KDP (EOE synchronism type) the nonlinear length becomes equal $l_1$ = 1.43 cm. The front is considered flat and angular deviation from the direction of synchronism is $\Theta$ = 10$^{-4}$ rad, which for KDP corresponds to the value $\Delta k$ = 0.15 cm.

Because the radiation intensity in the input beam isnonuniform in its section, the maximum intensity G of the second harmonic in each point of the beam cross section will be achieved with different lengths of a crystal. Using equation (2) one can calculate the geometric parameters of an nonlinear optical element under which efficiency of the second harmonic generation is maximum. Calculation results are tabulated in Table 1.

Table 1

| r cm: | 0 | 0.1 | 0.2 | 0.3 | 0.4 | 0.5 | 0.6 | 0.7 | 0.8 | 0.9 | 1.0 |
|---|---|---|---|---|---|---|---|---|---|---|---|
| l cm | 2.91 | 2.93 | 2.97 | 3.04 | 3.14 | 3.19 | 3.36 | 3.56 | 3.81 | 4.02 | 4.37 |

| r cm: | 1.1 | 1.2 | 1.3 | 1.4 | 1.5 | 1.6 | 1.7 | 1.8 | 1.9 |
|---|---|---|---|---|---|---|---|---|---|
| l cm | 4.68 | 5.17 | 5.62 | 6.13 | 6.90 | 7.6 | 8.4 | 9.6 | 10.6 |

where r is the distance from the beam axis counted in the XY plane;
l is length of the nonlinear optical element along the Z axis.

Fig. 5 illustrates the section of the nonlinear optical element 2 by the plane comprising the Z axis corresponding to thedimensions given in Table 1. In this case, it is expedient that the linear optical element 5 should be made from glass with a refractive in dex n = 1.47.

Let us compare the characteristics of the above-calculated nonlinear optical element for optical radiation harmonic generation and conventionally used as a doubler of the crystal with flat-parallel faces. Given the above-identified beam parameters, a crystal with length l = 4.1 cm is most effective, second harmonic generation efficiency in this crystal is $\eta_1$ = 0.71. At the same time, generation efficiency in the claimed nonlinear optical element $\eta$ = 0.76, i.e., by 7 percent higher.

In so doing, the dynamic range corresponding to the value $\eta$ = 0.55 (i.e., the range of input generation intensity at which second harmonic generation efficiency exceeds 0.55) turns out to be 47 percent wider.

The above-proposed nonlinear optical element for generating optical radiation harmonica turns out to be far less sensitive to the accuracy of alignment. Tabulated in Table 2 are the data on efficiency of the second harmonic generation as a function of angular deflection $\Theta_1$ between the direction of crystal synchronism and that of radiation propagation for a flat-parallel crystal KDP and for a nonlinear optical element made from KDP by the above-identified method.

Table 2

| $\theta_1$ | $\eta_2$ | $\eta_1$ | $\frac{\eta_2 - \eta_1}{\eta_1} 100\%$ |
|---|---|---|---|
| 0 | 0.88 | 0.834 | 5.5 |
| $1 \cdot 10^{-4}$ | 0.76 | 0.71 | 7 |
| $2 \cdot 10^{-4}$ | 0.595 | 0.524 | 13.5 |
| $3 \cdot 10^{-4}$ | 0.417 | 0.323 | 29.1 |
| $4 \cdot 10^{-4}$ | 0.255 | 0.168 | 52 |
| $5 \cdot 10^{-4}$ | 0.136 | 0.083 | 64 |

where $\Theta$ is the value of misalignment of input optical radiation relative to the direction of synchronism in rads;

$\eta_2$ is the harmonic generation efficiency in the disclosed optical element;

$\eta_1$ is harmonic generation efficiency in a conventional flat-parallel crystal;

$$\frac{\eta_2 - \eta_1}{\eta_1} 100\%$$

is the value of an efficiency increase in percent for the disclosed nonlinear optical element.

Thus, as regards all parameters (efficiency, dynamic range, sensitivity to alignment accuracy) the disclosed nonlinear optical element is superior to conventional nonlinear optical elements with flat-parallel faces for the second harmonic generation.

It is clear to anyone skilled in the art that the formula that we suggest does not cover the whole range of physical parameters affecting harmonic generation. In each particular case it is necessary to complement the formula with those physical parameters which are essential in this case.

As the next example let us consider the work of a nonlinear optical element designed to generate the fourth harmonic of optical radiation. A conventional schematic of the fourth harmonic generation comprises two nonlinear crystals with flat-parallel faces (in actual fact - two consecutively arranged doublers), in the first of which there occurs the generation of the second harmonic which is converted into the fourth one by the second crystal (Fig. 6).

In turn, the nonlinear optical element to generate the fourth harmonic should incorporate two nonlinear optical elements 2, 11, whose geometric dimensions and shape are chosen from the condition of maximum efficiency of conversion of the input optical radiation into the fourth harmonic.

In so doing, the antireflection coatings 6 and 12 are made for optical radiation 3 and the fourth harmonic 4, respectively.

Let us consider the shape and size of these nonlinear optical elements for the beam with the same parameters that are given in the preceding example.

The first nonlinear optical element 2 converting input radiation 3 into the second harmonic 4 should have the form defined hereinabove and illustrated in Fig. 5. Formula (2) is used to define the shape of the second nonlinear optical element 11 which converts the second harmonic to the fourth one. In so doing, the formula contains respective values of intensity, frequency and medium nonlinearity. The results of calculation of the nonlinear optical elements to generate the fourth harmonic are tabulated in Table 3.

Table 3

| r cm: | 0 | 0.1 | 0.2 | 0.3 | 0.4 | 0.5 | 0.6 | 0.7 | 0.8 | 0.9 | 1.0 |
|---|---|---|---|---|---|---|---|---|---|---|---|
| l cm: | 3.00 | 3.02 | 2.98 | 3.06 | 3.16 | 3.31 | 3.49 | 3.62 | 3.88 | 4.21 | 4.50 |

| r cm: | 1.1 | 1.2 | 1.3 | 1.4 | 1.5 | 1.6 |
|---|---|---|---|---|---|---|
| l cm: | 4.84 | 5.37 | 5.88 | 5.64 | 7.36 | 8.15 |

Used in Table 3 are the same symbols as in Table 1.

Compare the characteristics of the above-calculated nonlinear optical element to generate the fourth harmonic of optical radiation and the conventional schematic with flat-parallel crystals. The calculation shows that the conventional schematic with the length $l_1$ = 4.1 cm of the first crystal and length $l_2$ = 4cm of the second is most effective.

With such parameters the efficiency of the fourth harmonic generation (with respect to input radiation) reaches the value $\eta_1$ = 48.6%. At the same time, efficiency $\eta_2$ for the claimed device exceeds 54 percent. Thus, $\eta$ increases by 11.5 percent. The dynamic range corresponding to $\eta$ = 32 percent becomes 29 percent wider, provided the claimed device is used.

Sensitivity of the disclosed device for generating the fourth harmonic to the accuracy of alignment of the optical system turns out to be appreciably lower than in the conventional schematic, and even lower than in the above-calculated nonlinear optical element designed to generate the second harmonic.

Tabulated in Table 4 are the data on the relationship of efficiency $\eta$ of the fourth harmonic generation and the angular deviation $\Theta$ between the direction of synchronism and that of radiation propagation for the claimed device and for the conventional schematic from two flat-parallel crystals.

Table 4

| $\Theta$ | $\eta_2$ | $\eta_1$ | $\frac{\eta_2 - \eta_1}{\eta_1} 100\%$ |
|---|---|---|---|
| 0 | 0.78 | 0.713 | 9.4 |
| $1 \cdot 10^{-4}$ | 0.542 | 0.486 | 11.5 |
| $2 \cdot 10^{-4}$ | 0.345 | 0.249 | 38.5 |
| $3 \cdot 10^{-4}$ | 0.179 | 0.095 | 88.4 |

Used in Table 4 are the same symbols as in Table 2.

The data outlined show that the characteristics of the claimed device for generating the fourth harmonic markedly surpass the respective characteristics of the conventional schematic.

Thus, the device as claimed for generating harmonics of optical radiation helps enhance the efficiency of generation of optical radiation harmonics for beams with radiation parameters variable in cross-section, in so doing, the phase distortions being introduced are minimal. The device as claimed is particularly topical for laser sources of optical radiation because the overwhelming majority of laser sources have output radiation parameters variable in cross section. The disclosed device can function successfully inside the laser resonator preserving its advantages. A major advantage of the claimed device is an appreciable expansion of the dynamic range and a lesser influence of misalignment of the optical system. This markedly expands the possibilities of industrial application of the given device.

Industrial Applicability

The invention can be extensively used in laser technology for effective generation of harmonics in optical radiation.

Today the efficiency of generation of optical radiation harmonics in commercial laser units is normally 20 to 30 percent, i.e., efficiency is low.

## Claims

1. A device for generating harmonica of optical radiation, comprising a source (1) of optical radiation whose parameters (radiation) vary in the beam cross-section and, at least, one nonlinear optical element (2) arranged in the path of optical radiation (3) emitted by the source (1) of optical radiation, characterized in that the geometric parameters and the shape of the nonlinear optical element (2) are chosen from the condition under which the efficiency of generation of a harmonic (4) of optical radiation (3) as the latter passes through the nonlinear optical element (2) in each point of intersection of the beam by the plane perpendicular to the direction of optical radiation (3) propagation is close to the maximum for radiation with the preset parameters from the source (1) of optical radiation.

2. A device for generating harmonica of optical radiation, as claimed in claim 1, characterized in that the geometric parameters and shape of the nonlinear optical element (2) in the path of optical radiation (3) propagation along the Z axis are chosen by way of determining parameters of optical radiation (3) in the XY plane, perpendicular to the Z axis of optical radiation (3) propagation and fields in this plane with basically the same values of these parameters and further calculation for each of these fields the length(l)of the nonlinear optical element (2) along the Z axis of optical radiation (3) propagation from the condition of maximum efficiency of the generation of harmonics (4) of optical radiation (3), in so doing, the efficiency ($\eta$) of generation of the harmonic (4) of optical radiation (3) is determined from the equation:

$$\eta = \eta_{max} \, sn^2([\eta_o/\eta_{max}]^{\frac{1}{2}}, m),$$

where

$\eta_{max}$     is the maximum harmonic (4) generation efficiency for the given harmonic:

$$( 1 + f_1) F / t_1^2 ( F + G );$$

sn     is the elliptic Jacobi function;

$\eta_o$     is the drive, $\eta_o = (1 + f_1)^2/(1 + F/G)^2 (F/G) C^2 l^2 (F + G)$;

m     is the modulus $t_2/t_1$;

$t_1, t_2$     are found from the equation:

$1-(2-\sigma)t^2 + (1-\sigma)t^4 = \epsilon t^2$, $(t_2 < t_1)$;

$\sigma$     is the power balance, $1 - f_1 F/G$;

$\epsilon$     is the relative dephasing, $(\delta^2/\eta_o).(1 + f_1)F/(F + G)$;

F     is the intensity of input optical radiation (3) at frequency $1\omega$, $|f|^2$;

G     is the intensity of input optical radiation (3) at frequency $f_1\omega$, $|g|^2$;

H     is the output harmonic (4) radiation intensity at frequency $(1 + f_1)\omega$, $|h|^2$;

C     is the constant of effective nonlinearity;

$\delta$     is the total dephasing, $(1/2)\Delta kl$;

$\Delta k$     is the mismatch of wave vectors of input optical radiation (3) and harmonic (4);

l     is the length of the nonlinear optical element (2) along the Z axis of the optical radiation (3) propagation;

f,g,h     complex amplitudes of input and output optical radiation.

3. A device for generating harmonica of optical radiation as claimed in claims 1, 2, characterized in that it is provided with at least one linear optical element (5) arranged in the path of optical radiation (3) and, whose optical length along the Z axis of the optical radiation (3) propagation in each point of intersection by the XY plane perpendicular to the direction of propagation of optical radiation (3) is

EP 0 484 608 A1

chosen so what the total optical length of the system of the nonlinear optical element (2) and the linear optical element (5) in each point of intersection of the beam by the XY plane perpendicular to the direction of optical radiation (3) propagation remains, in principle, constant.

4. A device for generating harmonica of optical radiation, as claimed in claim 3, characterized in that the linear optical element (5) is made from the material with a refractive index basically coinciding with that of the material of the nonlinear optical element (2) for harmonic (4) radiation, and one of the surfaces of the linear optical element (5) is made curvalinear and coplanar to the curvalinear surface of the nonlinear optical element (2), in so doing, the nonlinear optical element (2) and linear optical element (5) are interconnected by these curvalinear surfaces to form a monolithic structure.

5. A device for generating harmonica of optical radiation, as claimed in claims 1, 2, 3, 4, characterized in that a laser is used as a source (1) of optical radiation.

6. A device for generating harmonics of optical radiation, as claimed in claims 1, 2, 3, 4, characterized in that when a laser is used as a source (1) of optical radiation,the nonlinear optical element (2) is arranged inside the laser resonator (8).

7. A device for generating harmonica of optical radiation, as claimed in claims 3, 4, characterized in that an antireflection coating (6), (7) is applied on the input and output surface of the system of the nonlinear optical element (2) and the linear optical element (5), in so doing, on the input surface the antireflection coating (6) is made for optical radiation (3) of the source (1) of optical radiation (3), and on the output surface - for the harmonic (4) of optical radiation (3).

8. A device for generating harmonics of optical radiation as claimed in claim 6, characterized in that the antireflection coating (9) is applied on the input and output surfaces of the system of nonlinear optical element (2) and linear optical element (5) and is designed both for radiation of the laser and that of the harmonic (4) of optical radiation (3).

9. A device for generating harmonics of optical radiation as claimed in claims 1, 2, 3, 4, 5, 6, 7, 8, characterized in that a nonlinear anisotropic crystal is used as a material from which the nonlinear optical element (2) is made, and a linear-polarized radiation is used as input optical radiation (3) (radiation of source (1) of optical radiation (3)).

11

FIG.4a

FIG.4b

FIG.5

FIG.6

FIG.1

FIG.2a

FIG.2b

FIG.3

**EUROPEAN SEARCH REPORT**

Application Number

EP 90 81 0858

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 912 922 (BOARD OF TRUSTEES OF LELAND STANFORD, Jr. UNIVERSITY) * Abstract; figures 1,2 * | 1,5,9 | G 02 F 1/37 H 01 S 3/109 |
| Y | | 5,6,9 | |
| D,Y | US-A-4 408 329 (G.D. FERGUSON) * Abstract; figures 1,2 * | 5,6,9 | |
| A | FR-A-2 645 973 (B.M. INDUSTRIES) * Claims 1-10; figure 1 * | 3,4,7,8 | |
| D,A | IEEE JOURNAL OF QUANTUM ELECTRONICS, vol. QE-23, no. 8, August 1987, pages 1361-1371; D. EMERL: "Quadrature frequency conversion" * Abstract * | 1 | |

| | |
|---|---|
| | TECHNICAL FIELDS SEARCHED (Int. Cl.5) |
| | G 02 F H 01 S |

The present search report has been drawn up for all claims

| Place of search | Date of completion of the search | Examiner |
|---|---|---|
| THE HAGUE | 09-07-1991 | MALIC K. |